# EUROPEAN PATENT SPECIFICATION

(11) **EP 1 500 277 B1**
(45) Date of publication and mention of the grant of the patent: **11.10.2006**
(21) Application number: 03718958.6
(22) Date of filing: 29.04.2003
(51) Int. Cl.: H04N 7/24, G11B 27/10, G09B 5/06

(54) **SIMPLIFIED PREPARATION OF COMPLEX INTERACTIVE DVD**
VEREINFACHTE HERSTELLUNG EINER KOMPLEXEN INTERAKTIVEN DVD
PREPARATION SIMPLIFIEE DE DVD INTERACTIF COMPLEXE

(30) Priority: 30.04.2002 GB 0209790
(43) Date of publication of application: 26.01.2005
(73) Proprietor: ZOOTECH LIMITED, Sheffield S1 4QT (GB)
(72) Inventor: GREEN, Stuart, Zoo Digital Group Plc, Sheffield S1 4FS (GB)
(74) Representative: McCann, Heather Alison
(86) International application number: PCT/GB2003/001829
(87) International publication number: WO 2003/094519

(56) References cited:
- EP-A- 0 994 480
- EP-A- 1 180 769
- WO-A-01/35412
- US-A- 5 825 727
- US-A- 6 108 281
- PATENT ABSTRACTS OF JAPAN vol. 2000, no. 26, 1 July 2002 (2002-07-01) & JP 2001 251581 A (JISEDAI JOHO HOSO SYSTEM KENKYUSHO:KK;RICOH CO LTD), 14 September 2001 (2001-09-14)
- MIMURA H: "DVD-Video format" COMPCON '97. PROCEEDINGS, IEEE SAN JOSE, CA, USA 23-26 FEB. 1997, LOS ALAMITOS, CA, USA,IEEE COMPUT. SOC, US, 23 February 1997 (1997-02-23), pages 291-294, XP010219552 ISBN: 0-8186-7804-6

## Description

The present invention relates in general to a method and apparatus for authoring complex audiovisual products.

In general terms, it is desired to assemble many small sections of raw audio and video content (i.e. sound clips and video clips) to form a finished audiovisual product, by way of an authoring process. However, in many environments a considerable degree of specialist knowledge and time must be invested in the authoring process in order to achieve a desirable finished audiovisual product. These problems are exacerbated where the audiovisual product has a complex navigational structure or requires many separate raw content objects.

As a simple example, a feature movie or television program typically has a straightforward linear navigational sequence of individual scenes. By contrast, it is now desired to develop new categories of audiovisual products which have a much more complex navigational structure, such as a movie with many scene choices or different movie endings, and/or which have a large number of individual scenes, such as an interactive quiz game with say one thousand individual quiz questions.

In one preferred embodiment, the present invention relates to authoring of audiovisual content into a form compliant with a specification for DVD-video and able to be recorded on an optical disc recording medium.

An optical disc is a convenient storage media for many different purposes. A digital versatile disc (DVD) has been developed with a capacity of up to 4.7Gb on a single-sided single-layer disc, and up to 17Gb on a double-sided double-layer disc. There are presently several different formats for recording data onto a DVD disc, including DVD-video, DVD-audio, and DVD RAM, amongst others. Of these, DVD-video is particularly intended for use with pre-recorded video content, such as a motion picture. As a result of the large storage capacity and ease of use, DVD discs are becoming popular and commercially important. Conveniently, a DVD-video disc is played using a dedicated playback device with relatively simple user controls, and DVD players for playing DVD-video discs are becoming relatively widespread. More detailed background information concerning the DVD-video specification is available from DVD Forum at www.dvdforum.org.

Although DVD-video discs and DVD-video players are becoming popular and widespread, at present only a limited range of content has been developed. In particular, a problem arises in that, although the DVD specification is very flexible, it is also very complex. The process of authoring content into a DVD-video compatible format is relatively expensive and time consuming. In practice, the flexibility and functions allowed in the DVD-video specification are compromised by the expensive and time consuming authoring task. Consequently, current DVD-video discs are relatively simple in their navigational complexity. Such simplicity can impede a user's enjoyment of a DVD-video disc, and also inhibits the development of new categories of DVD-video products.

An example DVD authoring tool is disclosed in WO 99/38098 (Spruce Technologies) which provides an interactive graphical authoring interface and data management engine. This known authoring tool requires a relatively knowledgeable and experienced operator and encounters difficulties when attempting to develop an audiovisual product having a complex navigational structure. In particular, despite providing a graphical user interface, the navigational structure of the desired DVD-video product must be explicitly defined by the author. Hence, creating a DVD-video product with a complex navigational structure is expensive, time-consuming and error-prone.

An aim of the present invention is to provide a convenient and simple method and apparatus for authoring an audio-visual product.

An aim of the preferred embodiments of the present invention is to provide a method and apparatus able to create an audio-visual product having a complex navigational structure and/or having many individual content objects, whilst reducing a time required for authoring and minimising a need for highly skilled operators.

Another preferred aim is to provide an authoring tool which is intuitive to use and is highly flexible.

An aim of particularly preferred embodiments of the invention is to allow efficient creation of audio-visual products such as DVD-video products that run on commonly available DVD-video players.

According to the present invention there is provided a method and apparatus as set forth in the appended claims. Preferred features of the invention will be apparent from the dependent claims, and the description which follows.

In a first aspect of the present invention there is provided an authoring method for use in creating an audiovisual product, comprising the steps of: providing a set of explicitly realised AV assets wherein the AV assets each comprise a video object, zero or more audio objects, and zero or more sub-picture objects, according to a predetermined output format and an expanded intermediate datastructure of nodes and links, where each node is associated with an explicitly realised AV asset of the set and the links represent navigational movement from one node to another during playback of the AV assets; and creating an audiovisual product in a predetermined output format, by creating objects in a hierarchical datastructure as defined by the predetermined output format with objects at levels of the datastructure, according to the intermediate datastructure of nodes and links, and where the objects in the hierarchical datastructure include the explicitly realised AV assets; characterised in that the method comprises the steps of: defining a plurality of components, including defining at least one choice component comprising a reference to a plurality of raw content objects and at least one authoring parameter; and a plurality of transitions that represent navigational movements between the plurality of components; expanding the plurality of components and the plurality of transitions including for the at least one choice component, building one or more of the set of explicitly realised AV assets from the one or more raw content objects according to the at least one authoring parameter creating the expanded intermediate datastructure wherein each node represents one AV asset of the set and creating the set of links between the nodes according to the plurality of transitions.

In a second aspect of the present invention there is provided a method of creating an optical disk product, comprising the steps of recording an audiovisual product created according to any of the methods defined herein onto an optical disk.

In a third aspect of the present invention there is provided a computing platform programmed to perform any of the methods defined herein.

In another aspect of the present invention there is provided a recording medium having recorded therein computer implementable instructions to perform any of the methods defined herein.

In yet another aspect of the present invention there is provided a recording medium having recorded thereon an audiovisual product authored according to any of the methods defined herein.

For a better understanding of the invention, and to show how embodiments of the same may be carried into effect, reference will now be made, by way of example, to the accompanying diagrammatic drawings in which:
Figure 1 is an overview of an authoring method according to a preferred embodiment of the present invention;
Figure 2 is a schematic diagram showing a simple abstraction of a desired audiovisual product;
Figure 3 shows in more detail a component used as part of the abstraction of Figure 2;
Figure 4 shows an example prior art authoring method compared with an example preferred embodiment of the present authoring method;
Figure 5 shows another example embodiment of the present authoring method using components and transitions;
Figure 6 shows the example of Figure 5 in a tabular format;
Figure 7 is an overview of a method for evaluating components and transitions;
Figure 8 shows evaluation of components in more detail;
Figure 9 shows evaluation of transitions in more detail;
Figure 10 shows a portion of an expanded datastructure during evaluation of components and transitions;
Figure 11 is an overview of a preferred method for creating DVD-video structures from an expanded datastructure;
Figure 12 shows a step of creating DVD video structure locations in more detail; and
Figure 13 shows a step of creating DVD-video compatible datastructures in more detail.

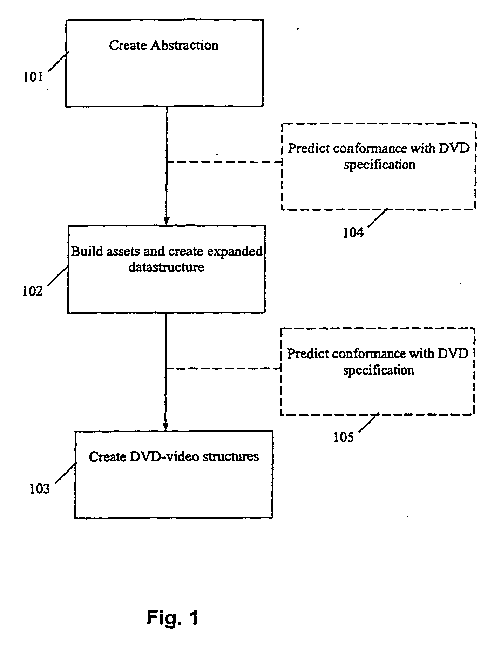

Figure 1 shows an overview of an authoring method according to a preferred embodiment of the present invention. The present invention is applicable when authoring many types of audiovisual products, and in particular when complex navigational structure or content are involved.

As one example, the present invention is applicable to authoring of video on demand products delivered remotely from a service provider to a user, such as over a computer network or other telecommunications network. Here, the present invention is especially useful in authoring interactive products, where user choices and responses during playback of the product dictate navigational flow or content choices.

As another example, the present invention is particularly suitable for use in the authoring of an audiovisual product compliant with a DVD-video specification. This example will be discussed in more detail below in order to illustrate the preferred arrangements of present invention. The audiovisual product is suitably recorded onto a recording medium such as an optical disk. The DVD-video specification defines a series of data objects that are arranged in a hierarchical structure, with strict limits on the maximum number of objects that exist at each level of the hierarchy. Hence, in one preferred embodiment of the present invention it is desired to create an audiovisual product which meets these and other limitations of the specification. In particular it is desired that the resultant audiovisual product will play on commonly available DVD players. However, it is also desired to create the audiovisual product having a complex navigational structure, in order to increase a user's enjoyment of the product, and in order to allow the creation of new categories of audiovisual products.

In the field of DVD-video, audiovisual content is considered in terms of audio-visual assets (also called AV assets or presentation objects). According to the DVD-video specification each AV asset contains at least one video object, zero or more audio objects, and zero or more sub-picture objects. That is, a section of video data is presented along with synchronised audio tracks and optional sub-picture objects. The current DVD-video specification allows up to eight different audio tracks (audio streams) to be provided in association with up to nine video objects (video angle streams). Typically, the video streams represent different camera angles, whilst the audio streams represent different language versions of a soundtrack such as English, French, Arabic etc. Usually, only one of the available video and audio streams is selected and reproduced when the DVD-video product is played back. Similarly, the current specification allows up to thirty-two sub-picture streams, which are used for functions such as such as language subtitles. Again, typically only one of the sub-picture streams is selected and played back, to give for example a movie video clip with English subtitles from the sub-picture stream reproduced in combination with a French audio stream. Even this relatively simple combination of video, audio and sub-picture streams requires a high degree of coordination and effort during authoring, in order to achieve a finished product such as a feature movie. Hence, due to the laborious and expensive nature of the authoring process there is a strong disincentive that inhibits the development of high-quality audiovisual products according to the DVD-video specification. There is then an even stronger impediment against the development of audiovisual products with complex navigational flow or using high numbers of individual raw content objects.

Conveniently, the authoring method of the present invention is implemented as a program, or a suite of programs. The program or programs are recorded on any suitable recording medium, including a removable storage such as a magnetic disk, hard disk or solid state memory card, or as a signal modulated onto a carrier for transmission on any suitable data network, such as the internet.

In use, the authoring method is suitably performed on a computing platform, ideally a general purpose computing platform such as a personal computer or a client-server computing network. Alternatively, the method may be implemented, wholly or at least in part, by dedicated authoring hardware.

As shown in Figure 1, the authoring method of the preferred embodiment of the present invention comprises three main stages, namely: creating a high-level abstraction (or storyboard) representing functional sections of a desired audiovisual product in step 101; automatically evaluating the high-level abstraction to create a fully expanded intermediate structure and a set of AV assets in step 102; and creating an output datastructure compliant with a DVD-video specification using the expanded intermediate structure and AV assets in step 103. Suitably, the output datastructure is then recorded onto a recording medium, in this case being a blank optical disc, to create a DVD-video product.

The method outlined in Figure 1 will now be explained in more detail.

Firstly, looking at the step 101 of Figure 1, the high-level abstraction is created by forming a plurality of components that implicitly represent functional elements of a desired DVD-video product, and a set of transitions that represent movements between the components that will occur during playback.

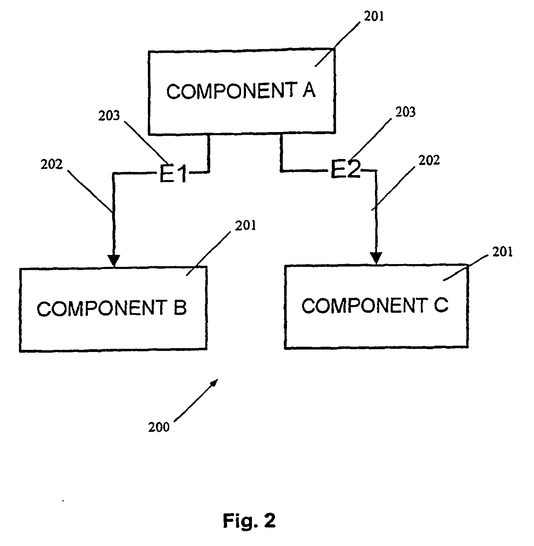

Figure 2 is a schematic diagram showing a simple abstraction of a desired audiovisual product. In the example of Figure 2 there are three components 201, linked by two transitions 202. The components 201 represent functional elements of the desired audiovisual product, where one or more portions of AV content (combinations of video clips, audio clips, etc) are to be reproduced during playback. The transitions 202 indicate legitimate ways in which the product moves from one component to another during playback. In the example of Figure 2, the transitions 202 are all explicitly defined. Suitably, each transition 202 is associated with an event 203, which indicates the circumstances giving rise to that transition. An event 203 is a triggering action such as the receipt of a user command, or the expiry of a timer, that influences movement through the sections of AV content during playback. Referring to Figure 2, starting from a particular component A, and given all possible actions, exactly one event 203 will be satisfied, allowing a transition 202 from the current component A to a next component B or C.

The preferred embodiment allows for three different types of component. These are an information component, a choice component and a meta-component.

An information component represents what will in due course become a single AV asset in the desired audiovisual product. Suitably, an information component simply comprises a reference to a raw content object or collection of raw content objects (i.e. raw video and audio clips) that will be used to create an AV asset in the audiovisual product. For example, an information component refers to a welcome sequence that is displayed when the DVD-video product is played in a DVD-video player. The same welcome sequence is to be played each time playback begins. It is desired to display the welcome sequence, and then proceed to the next component. An information component (which can also be termed a simple component) is used principally to define presentation data in the desired DVD-video product.

A choice component represents what will become a plurality of AV assets in the desired audiovisual product. In the preferred embodiment, the choice component (alternately termed a multi-component) comprises a reference to at least one raw content object, and one or more parameters. Here, for example, it is desired to present a welcome sequence in one of a plurality of languages, dependent upon a language parameter. That is, both a speaker's picture (video stream) and voice track (audio stream) are changed according to the desired playback language. Conveniently, a choice component is used to represent a set of desired AV assets in the eventual audiovisual product, where a value of one or more parameters is used to distinguish between each member of the set. Hence, a choice component represents mainly presentation data in a desired DVD-video product, but also represents some navigational structure (i.e. selecting amongst different available AV assets according to a language playback parameter).

A meta-component comprises a procedurally-defined structure representing a set of information components and/or a set of choice components, and associated transitions. Conveniently, a meta-component may itself define subsidiary meta-components. A meta-component is used principally to define navigational structure in the desired audiovisual product, by representing other components and transitions.

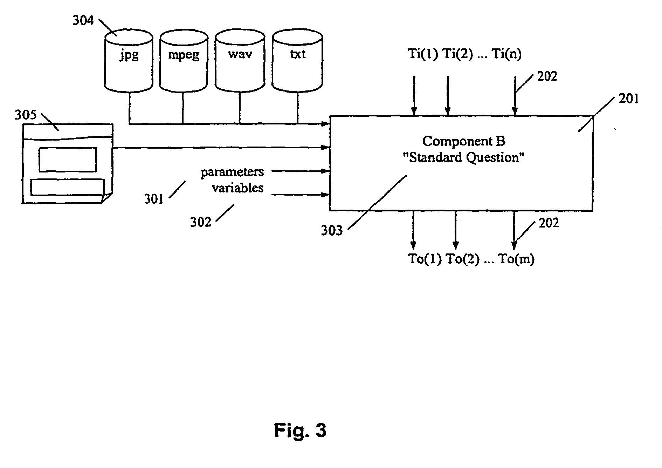

Figure 3 shows a choice component or information component 201 in more detail. The component is reached by following one of a set of incoming transitions 202, labelled Ti (1...n), and is left by following one of a set of outgoing transitions To(1...m).

The component 201 is defined with reference to zero or more parameters 301, which are used only during the authoring process. However, the component may also be defined with reference to zero or more runtime variables 302. Each variable 302 records state information that can be read and modified within the scope of each component, during playback of the audiovisual product such as in a standard DVD player. Conveniently, the component 201 is provided with a label 303 for ease of handling during the authoring process.

The component 201 contains references to one or more items of content 304. The items of content are raw multi-media objects (still picture images, video clips, audio clips, text data, etc.) recorded in one or more source storage systems such as a file system, database, content management system, or asset management system, in any suitable format such as .gif, .tif, .bmp, .txt, .rtf, .jpg, .mpg, .qtf, .mov, .wav, .rm, .qtx, amongst many others. It will be appreciated that these raw content items are not necessarily at this stage in a format suitable for use in the DVD-video specification, which demands that video, audio and sub-picture objects are provided in selected predetermined formats (i.e. MPEG).

Each component 201 uses the references as a key or index which allows that item of content to be retrieved from the source storage systems. The references may be explicit (e.g. an explicit file path), or may be determined implicitly, such as with reference to values of the parameters 301 and/or variables 302 (i.e. using the parameters 301 and/or variables 302 to construct an explicit file path).

Conveniently, the component 201 also comprises a reference to a template 305. The template 305 provides, for example, a definition of presentation, layout, and format of a desired section of AV content to be displayed on screen during playback. A template 305 draws on one or more items of content 304 to populate the template. Typically, one template 305 is provided for each component 201. However, a single template 305 may be shared between plural components 201, or vice versa. A template 305 is provided in any suitable form, conveniently as an executable program, a plug-in or an active object. A template is conveniently created using a programming language such as C++, Visual Basic, Shockwave or Flash, or by using a script such as HTML or Python, amongst many others. Hence, it will be appreciated that a template allows a high degree of flexibility in the creation of AV assets for a DVD-video product. Also, templates already created for other products (such as a website) may be reused directly in the creation of another form of audiovisual product, in this case a DVD-video product.

The parameters 301, runtime variables 302, content items 304 and template 305 together allow one or more AV assets to be produced for use in the desired audiovisual product. Advantageously, creating a component 201 in this parameterised form allows a large plurality of AV assets to be represented simply and easily by a single component.

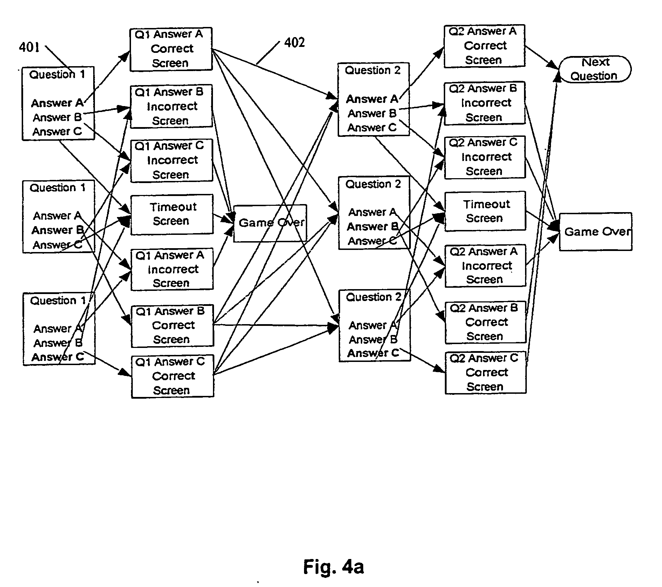

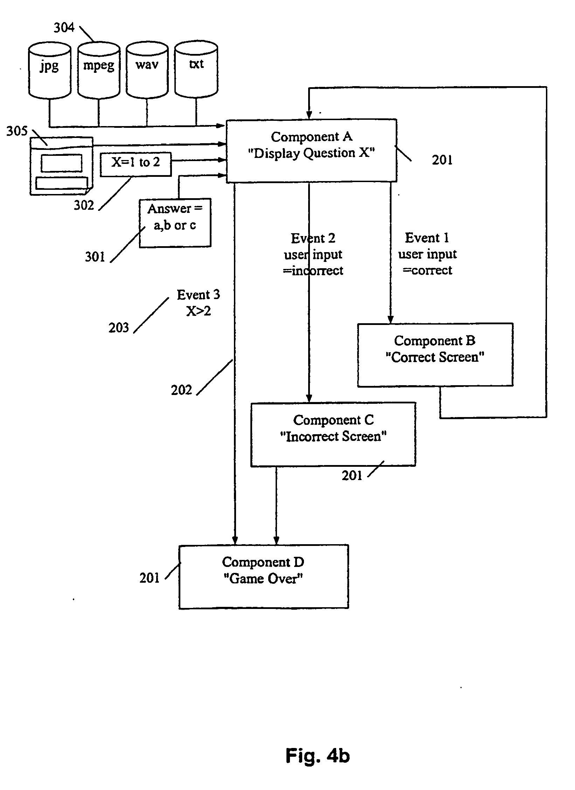

To illustrate the power and advantages of creating components 201 and transitions 202 as described above, reference will now be made to Figure 4 which compares a typical prior art method for authoring an audiovisual product against the preferred embodiment of the present invention. In this example it is desired to develop an audiovisual product which allows the user to play a simple quiz game.

In Figure 4a, each AV asset 401 which it is desired to present in the eventual audiovisual product must be created in advance, and navigation between the assets defined using navigation links represented by arrows 402. Here, the game involves answering a first question, and, if correct, then answering a second question. The answer to each question is randomised at runtime using a runtime variable such that one of answers A, B and C is correct, whilst the other two are incorrect. In this simple example of Figure 4a it can be seen that a large number of assets need to be created, with an even greater number of navigational links. Hence, the process is relatively expensive and time consuming, and is prone to errors.

Figure 4b shows an abstraction, using components and transitions as described herein, for an equivalent quiz game. It will be appreciated that the abstraction shown in Figure 4b remains identical even if the number of questions increases to ten, twenty or even fifty questions, whereas the representation in Figure 4a becomes even more complex as each question is added.

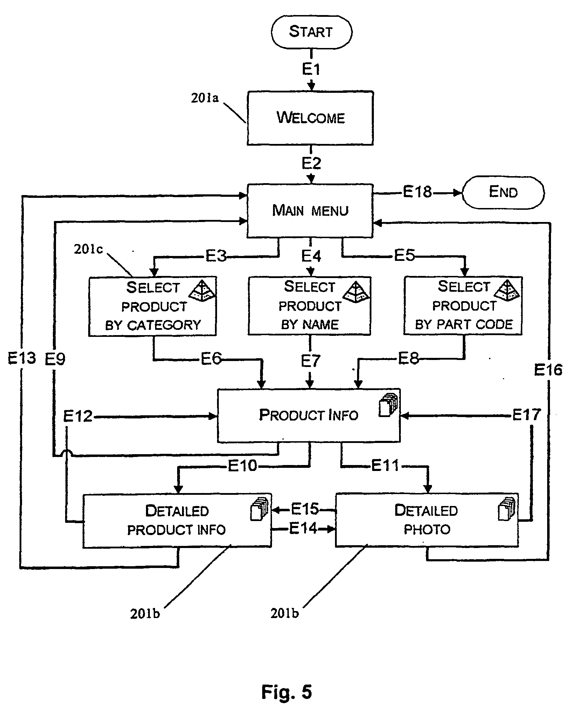

Figure 5 shows another example abstraction using components and transitions. Figure 5 illustrates an example abstraction for an audiovisual product that will contain a catalogue of goods sold by a retail merchant. A welcome sequence is provided as an information component 201a. Choice components 201b are used to provide a set of similar sections of AV content such as summary pages of product information, or pages of detailed product information including photographs or moving video, for each product in the catalogue. Here, the catalogue contains, for example, of the order of one thousand separate products, each of which will result in a separate AV asset in the desired DVD-video product. Meta-components 201c provide functions such as the selection of products by category, name or by part code. These meta-components are procedurally defined.

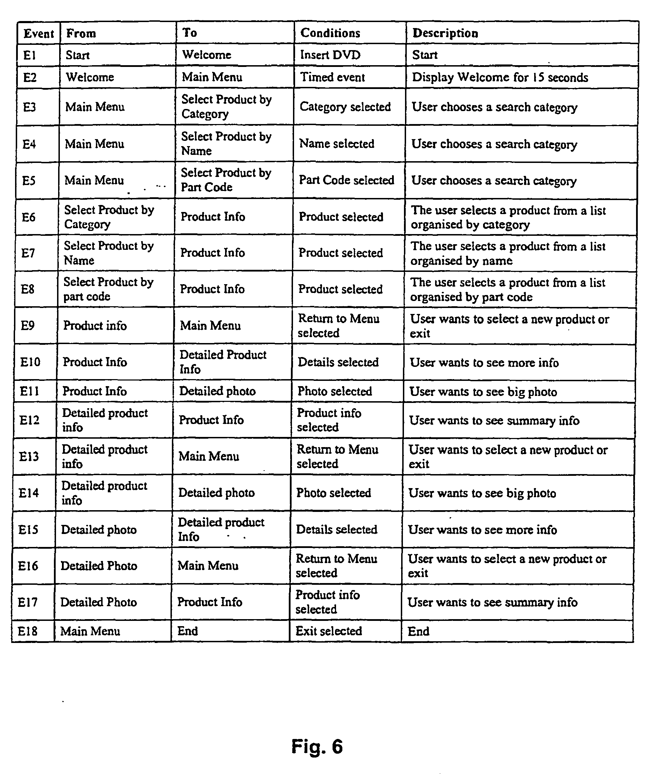

Figure 6 shows a tabular representation for the abstraction shown in schematic form in Figure 5.

In use, the authoring method and apparatus suitably presents a convenient user interface for creating components and transitions of the high-level abstraction. Ideally, a graphical user interface is provided allowing the definition of components, transitions and events, similar to the schematic diagram of Figure 5. Most conveniently, the user interface provides for the graphical creation of components such as by drawing boxes and entering details associated with those boxes, and defining transitions by drawing arrows between the boxes and associating events with those arrows. Alternatively, a tabular textual interface is provided similar to the table of Figure 6.

Referring again to Figure 1, the abstraction created in step 101 is itself a useful output. The created abstraction may be stored for later use, or may be transferred to another party for further work. However, in most cases the authoring method is used to automatically create a final audiovisual product, such as a DVD-video product, from the abstraction.

Referring to Figure 1, the method optionally includes the step 104 of checking for compliance with a DVD specification. It is desired to predict whether the resulting DVD-video product will conform to a desired output specification, in this case the DVD-video specification. For example, the DVD-video specification has a hierarchical structure with strict limits on a maximum number of objects that may exist at each level, and limits on the maximum quantity of data that can be stored on a DVD-video disc.

In one embodiment, the checking step 104 is performed using the created components 201 and transitions 202. As discussed above, the components 201 contain references to raw AV content objects 304 and templates 305, and authoring parameters 301, 302, that allow AV assets to be produced. The checking step 104 comprises predicting a required number of objects at each level of the hierarchical structure, by considering the number of potential AV assets that will be produced given the possible values of the authoring parameters (i.e. authoring-only parameters 301 and runtime variables 302), and provides an indication of whether the limits for the maximum number of objects will be exceeded. Similarly, where a component defines a set of similar AV assets, then it is useful to predict the physical size of those assets, and so check that the audiovisual product is expected to fit within the available capacity of a DVD disc. Advantageously, the conformance check of step 104 is performed without a detailed realisation of every AV asset, whilst providing an operator with a reasonably accurate prediction of expected conformance. If non-conformance is predicted, the operator may then take steps, at this early stage, to remedy the situation. As a result, it is possible to avoid unnecessary time and expense in the preparation of a full audiovisual product which is non-conformant.

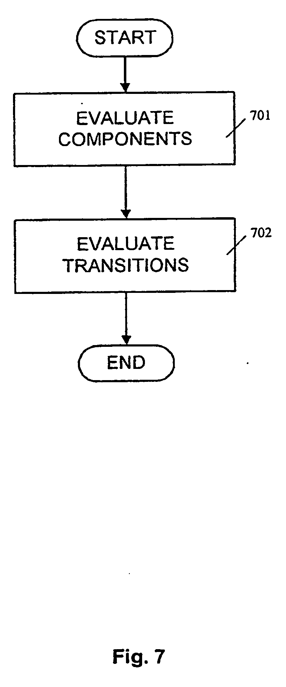

As shown in Figure 1, in step 102 the components 201 and transitions 202 of the high level abstraction 200 are automatically evaluated and expanded to create AV assets and an intermediate datastructure of nodes and links. Figure 7 shows the step 102 of Figure 1 in more detail.

The components 201 and transitions 202 may be evaluated in any order, but it is convenient to first evaluate the components, and then to evaluate the transitions. Ideally, any meta-components in the abstraction are evaluated first. Where a meta-component results in new components and transitions, these are added to the abstraction, until all meta-components have been evaluated, leaving only information components and parameterised choice components.

An expanded intermediate datastructure is created to represent the abstract components 201 and transitions 202 in the new evaluated form. This expanded datastructure comprises branching logic derived from the events 203 attached to the transitions 202 (which will eventually become navigation data in the desired audiovisual product) and nodes associated with AV assets derived from the components 201 (which will eventually become presentation data in the audiovisual product). However, it is not intended that the expanded datastructure is yet in a suitable form for creating an audiovisual product in a restricted format such as a DVD-video product, since at this stage there is no mapping onto the hierarchical structure and other limitations of the DVD-video specification.

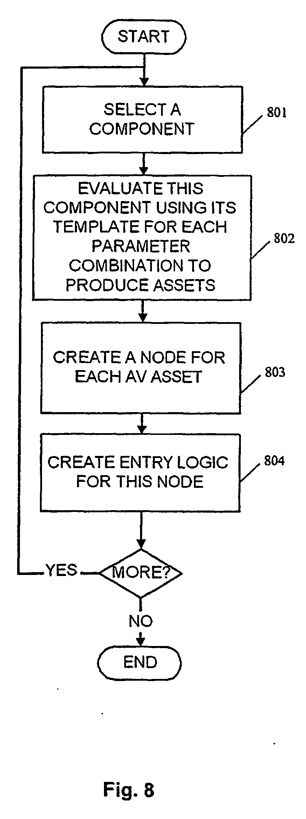

Figure 8 shows step 701 of Figure 7 in more detail, to explain the preferred method for evaluating the components 201. As shown in Figure 8, each information component 201a and each choice component 201b is selected in turn in step 801. Each component 201 is evaluated to provide one or more AV assets in step 802. In an information component, this evaluation comprises creating an AV asset from the referenced raw content objects 304. In a choice component, this evaluation step suitably comprises evaluating a template 305 and one or more raw content objects 304 according to the authoring parameters 301/302, to provide a set of AV assets. Suitably, a node in the expanded datastructure is created to represent each AV asset, at step 803. At step 804, entry logic and/or exit logic is created to represent a link to or from each node such that each AV asset is reached or left under appropriate runtime conditions.

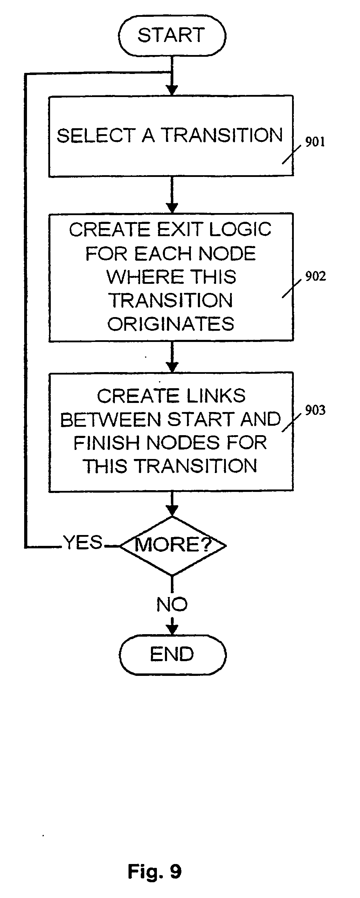

Figure 9 shows a preferred method for evaluating transitions in step 702 of Fig.7. Each transition 202 is selected in any suitable order in step 901. In step 902 the conditions of the triggering event 203 associated with a particular transition 202 are used to create entry and/or exit logic for each node of the expanded datastructure. In step 903 explicit links are provided between the nodes.

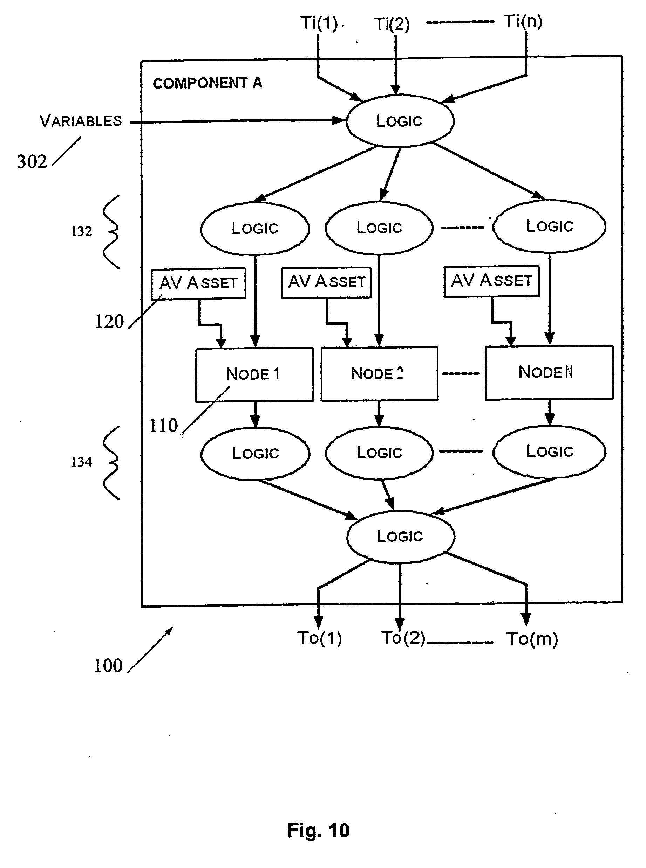

Figure 10 is a schematic illustration of a component 201 during evaluation to create a set of nodes 110 each associated with an AV asset 120, together with entry logic 132 and exit logic 134, defining movement between one node 110 and the next. The entry logic 132 and exit logic 134 reference runtime variables 302 which are available during playback (e.g. timer events, player status, and playback states), and the receipt of user commands. Conveniently, the evaluation step consumes each of the authoring-only parameters 301 associated with the abstract components 201, such that only the runtime variables 302 and runtime actions such as timer events and user commands remain.

Referring again to Figure 1, a conformance checking step 105 may, additionally or alternatively to the checking step 104, be applied following the evaluation step 102. Evaluation of the abstraction in step 102 to produce the expanded datastructure 100 allows a more accurate prediction of expected compliance with a particular output specification. In particular, each node of the expanded datastructure represents one AV asset, such that the total number of AV assets and object locations can be accurately predicted, and the set of AV assets has been created, allowing an accurate prediction of the capacity required to hold these assets. Conveniently, information about conformance or non-conformance is fed back to an operator. Changes to the structure of the product can then be suggested and made in the abstraction, to improve compliance.

Referring to Figure 1, in step 103 the expanded datastructure from step 102 is used to create an audiovisual product according to a predetermined output format, in this case by creating specific structures according to a desired DVD-video specification.

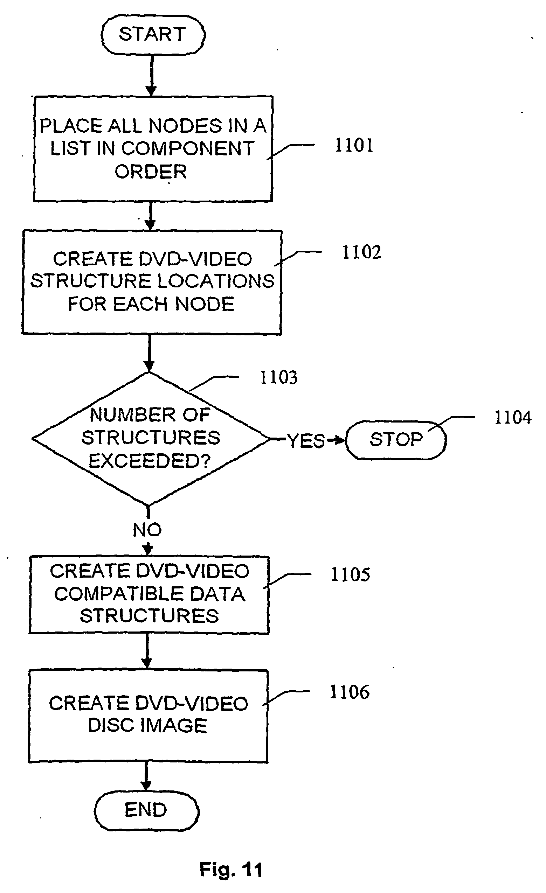

Figure 11 shows an example method for creation of the DVD video structures. In step 1101, the nodes 110 in the expanded datastructure are placed in a list, such as in an order of the abstract components 201 from which those nodes originated, and in order of the proximity of those components to adjacent components in the abstraction. As a result, jumps between DVD video structure locations during playback are minimised and localised, in order to improve playback speed and cohesion.

Each node is used to create a DVD video structure location at step 1102. Optionally at step 1103 if the number of created DVD video structure locations exceeds the specified limit set by the DVD-video specification then creation is stopped at 1104, and an error reported. Assuming the number of structures is within the specified limit then DVD video compatible datastructures are created at step 1105. Finally, a DVD video disc image is created at step 1106. Conveniently, commercially available tools are used to perform step 1106, and need not be described in detail here.

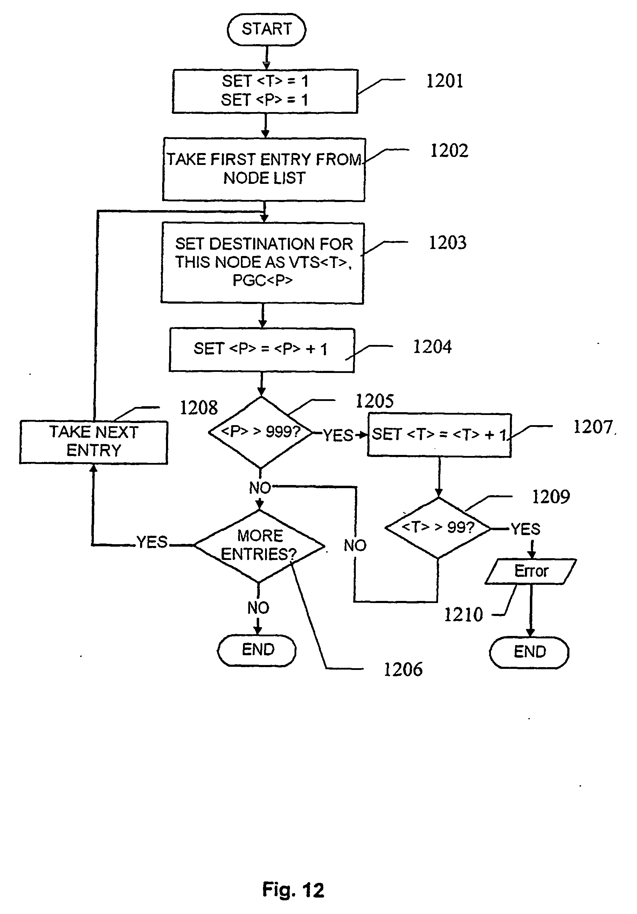

Step 1102 is illustrated in more detail in Figure 12. In this example variable T represents a number of a video title set VTS (ie. from 1-99) whilst variable P represents a program chain PGC (ie. from 1-999) within each video title set. As shown in Figure 12 the nodes 110 of the expanded datastructure 100 are used to define locations in the video title sets and program chains. As the available program chains within each video title set are consumed, then the locations move to the next video title set. Here, many alternate methods are available in order to optimise allocation of physical locations to the nodes of the expanded datastructure.

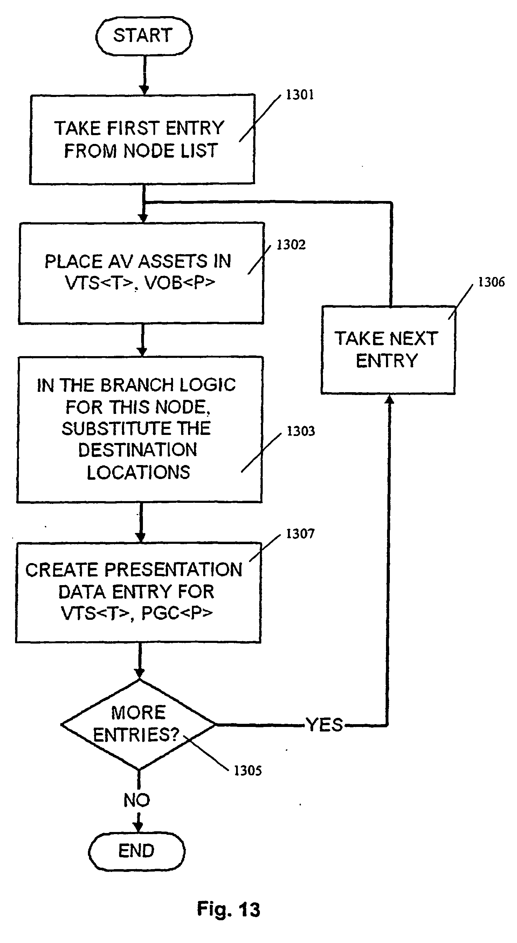

Step 1105 of Figure 11 is illustrated in more detail in Figure 13. Figure 13 shows a preferred method for creating DVD-video compatible datastructures by placing the AV assets 120 associated with each node 110 in the structure location assigned for that node, and substituting links between the nodes with explicit references to destination locations. At step 1307 this results in an explicit DVD compatible datastructure which may then be used to create a DVD disc image. Finally, the DVD disc image is used to record a DVD disc as a new audiovisual product.

The DVD authoring method and apparatus described above have a number of advantages. Creating components that represent parameterised sections of audio visual content allow many individual AV assets to be implicitly defined and then automatically created. Repetitive manual tasks are avoided, which were previously time consuming, expensive and error-prone. The authoring method and apparatus significantly enhance the range of features available in existing categories of audiovisual products such as movie presentations. They also allow new categories of audiovisual products to be produced. These new categories include both entertainment products such as quiz-based games and puzzle-based games, as well as information products such as catalogues, directories, reference guides, dictionaries and encyclopaedias. In each case, the authoring method and apparatus described herein allow full use of the video and audio capabilities of DVD specifications such as DVD-video. A user may achieve playback using a standard DVD player with ordinary controls such as a remote control device. A DVD-video product having highly complex navigational content is readily created in a manner which is simple, efficient, cost effective and reliable.

Although a few preferred embodiments have been shown and described, it will be appreciated by those skilled in the art that various changes and modifications might be made without departing from the scope of the invention, as defined in the appended claims.

## Claims

1. An authoring method for use in creating an audiovisual product, comprising the steps of:
providing a set of explicitly realised AV assets (120) wherein the AV assets (120) each comprise a video object, zero or more audio objects, and zero or more sub-picture objects, according to a predetermined output format and an expanded intermediate datastructure of nodes (110) and links (132,134), where each node (110) is associated with an explicitly realised AV asset (120) of the set and the links (132,134) represent navigational movement from one node (110) to another during playback of the AV assets (120); and
creating an audiovisual product in a predetermined output format, by creating objects in a hierarchical datastructure as defined by the predetermined output format with objects at levels of the datastructure, according to the intermediate datastructure of nodes (110) and links (132,134), and where the objects in the hierarchical datastructure include the explicitly realised AV assets (120);
**characterised in that** the method comprises the steps of:
defining a plurality of components (201), including defining at least one choice component (201b) comprising a reference to a plurality of raw content objects (304) and at least one authoring parameter (301,302); and a plurality of transitions (202) that represent navigational movements between the plurality of components (201);
expanding the plurality of components (201) and the plurality of transitions (202) including for the at least one choice component (201b), building one or more of the set of explicitly realised AV assets (120) from the one or more raw content objects (304) according to the at least one authoring parameter (301,302) creating the expanded intermediate datastructure wherein each node (110) represents one AV asset (120) of the set and creating the set of links (132,134) between the nodes (110) according to the plurality of transitions (202).

2. The method of claim 1, wherein the defining step comprises defining at least one information component (201a) that comprises a reference to a raw content object (304).

3. The method of claim 2, wherein the reference denotes a file path to a location where the raw content object (304) is stored.

4. The method of claim 1, 2 or 3, wherein the at least one authoring parameter (301,302) comprises a runtime variable (302) available during playback of the audiovisual product.

5. The method of any preceding claim, wherein the at least one authoring parameter (301,302) comprises an authoring-only parameter (301) that will not be available during playback of the audiovisual product.

6. The method of any preceding claim, wherein the choice component (201b) comprises a reference to a presentation template (305) and a reference to at least one substitutable raw content object (304) to be placed in the template according to the at least one authoring parameter (301,302).

7. The method of any preceding claim, wherein the defining step comprises defining at least one meta-component (201c) representing a set of components (201) and transitions.

8. The method of claim 7, wherein the at least one meta-component (201c) is a procedurally defined representation of the set of components (201) and transitions (202).

9. The method of any preceding claim, wherein each transition (202) represents a permissible movement from one component (201) to another component (201).

10. The method of any preceding claim, wherein each transition (202) is associated with a triggering event (203).

11. The method of claim 10, wherein the triggering event (203) is an event occurring during playback of the audiovisual product.

12. The method of claim 11, wherein the triggering event (203) is receiving a user command, or expiry of a timer.

13. The method of any preceding claim, further comprising the step of checking expected conformance of the audiovisual product with the predetermined output format, using the plurality of components (201) and the plurality of transitions (202).

14. The method of claim 13, wherein the predetermined output format is a hierarchical datastructure having limitations on a number of objects that may exist in the datastructure at each level of the hierarchy, and the checking step comprises predicting an expected number of objects at a level and comparing the expected number with the limitations of the hierarchical datastructure.

15. The method of claim 13 or 14, wherein the checking step comprises predicting an expected total size of the audiovisual product, and comparing the expected total size against a storage capacity of a predetermined storage medium.

16. The method of any preceding claim, wherein the expanding step comprises:
selecting one or more raw content objects (304) from amongst the plurality of raw content objects (304) according to the at least one authoring parameter (301,302); and
combining the selected raw content objects (304) to form one of the AV assets (120).

17. The method of claim 16, comprising repeating the selecting and combining steps to automatically build a plurality of the explicitly realised AV assets (120) from the one of the components (201).

18. The method of any preceding claim, wherein the expanding step comprises:
creating from each of the plurality of components (201) one or more explicitly realised AV assets (120) to provide the set of AV assets (120).

19. The method of any preceding claim, wherein each transition (202) is associated between first and second components (201), and creating the set of links (132,134) comprises evaluating each transition (202) to create one or more links (132,134), each of the links (132,134) being between a node (110) created from the first component (201) and a node (110) created from the second component (201).

20. The method of any preceding claim, wherein the expanding step comprises evaluating at least one of the transitions (202) to create exit logic (134) associated with at least one first node (110), evaluating one of the components (201) to create entry logic (132) associated with at least one second node (110), and providing a link between the first and second nodes (110) according to the entry logic (132) and the exit logic (134).

21. The method of claim 20, wherein at least one of the transitions (202) is associated with a triggering event (203), and the expanding step comprises evaluating the triggering event (203) to determine the exit logic (134) associated with the at least first one node (110).

22. The method of any preceding claim, further comprising the step of checking expected conformance of the audiovisual product with the predetermined output format, using the AV assets (120) and the expanded intermediate datastructure of nodes (110) and links (132,134).

23. The method of claim 22, wherein the predetermined output format is a hierarchical datastructure having limitations on a number of objects that may exist in the datastructure at each level of the hierarchy, and the checking step comprises predicting an expected number of objects at a level and comparing the expected number with the limitations of the hierarchical datastructure.

24. The method of claim 23, wherein the checking step comprises predicting an expected total size of the audiovisual product, and comparing the expected total size against a storage capacity of a predetermined storage medium.

25. The method of any preceding claim, wherein the AV assets (120) have a data format specified according to the predetermined output format.

26. The method of any preceding claim, wherein the AV assets (120) each have a data format according to the predetermined output format, whilst the raw content objects (304) are not limited to a data format of the predetermined output format.

27. The method of any preceding claim, further comprising the step of:
recording the audiovisual product onto a recording medium.

28. The method of claim 27, wherein the recording medium is an optical disk.

29. The method of any preceding claim, wherein the predetermined output format is a DVD-video specification.

30. The method of any preceding claim, wherein the AV assets (120) each comprise at least one video object, zero to eight audio objects, and zero to thirty-two sub-picture objects, according to the DVD-video specification.

31. The method of any preceding claim, wherein the predetermined output format is a DVD-video specification and the creating step comprises creating DVD-video structure locations from the nodes (110) of the expanded intermediate datastructure, placing the explicitly realised AV assets (120) at the created structure locations, and substituting the links (132,134) of the expanded intermediate datastructure with explicit references to the DVD-video structure locations.

32. The method of any preceding claim, wherein the method is implemented by a computer.

33. A method of creating an optical disk product, comprising the steps of:
recording an audiovisual product created according to the method of any of claims 1 to 31 onto an optical disk.

34. A computing platform programmed to perform the method of any of claims 1 to 32.

35. A recording medium having recorded therein computer implementable instructions to perform the method of any of claims 1 to 32.

36. A recording medium having recorded thereon an audiovisual product authored according to the method of any of claims 1 to 32.

## Patentansprüche

1. Produktionsverfahren zum Erzeugen eines audiovisuellen Produktes, mit folgenden Verfahrensschritten:
Bereitstellen eines Satzes explizit realisierter AV-Inhalte (120), von denen die AV-Inhalte (120) jedes ein Video-Objekt, Null oder mehr Audio-Objekte und Null oder mehr Sub-Bild-Objekte entsprechend einem vorbestimmten Ausgabeformat und einer expandierten Zwischendatenstruktur von Knoten (110) und Verbindungen (132, 134) enthalten, wobei jeder Knoten (110) einem explizit realisierten AV-Inhalt (120) des Satzes zugeordnet ist und die Verbindungen (132, 134) eine navigatorische Bewegung von einem Knoten (110) zu einem anderen Knoten während einer Wiedergabe der AV-Inhalte (120) darstellen; und
Erzeugen eines audiovisuellen Produktes in einem vorbestimmten Ausgabeformat durch Erzeugen von Objekten in einer hierarchischen Datenstruktur wie durch das vorbestimmte Ausgabeformat definiert mit Objekten in Ebenen der Datenstruktur entsprechend der Zwischendatenstruktur von Knoten (110) und Verbindungen (132, 134), und wobei die Objekte in der hierarchischen Datenstruktur die explizit realisierten AV-Inhalte enthalten;
**dadurch gekennzeichnet, dass** das Verfahren folgende Schritte enthält:
Definieren einer Mehrzahl von Komponenten (201) einschließlich Definieren von mindestens einer Wahlkomponente (201 b) mit einer Referenz zu einer Mehrzahl von Rohinhaltsobjekten (304) und mindestens einem Produktionsparameter (301, 302) sowie einer Mehrzahl von Übergängen (202), die navigatorische Bewegungen zwischen der Mehrzahl von Komponenten (201) darstellen;
Expandieren der Mehrzahl von Komponenten (201) und der Mehrzahl von Übergängen (202) einschließlich der mindestens einen oder mehreren Wahlkomponenten (201b), Bilden eines oder mehrerer der Sätze von explizit realisierten AV-Inhalten (120) aus einer oder mehreren Rohinhaltsobjekten (304) entsprechend dem mindestens einen Produktionsparameter (301, 302), die die Zwischendatenstruktur erzeugen, wobei jeder Knoten (110) einen AV-Inhalt (120) des Satzes darstellt und den Satz von Verbindungen (132, 134) zwischen den Knoten (110) entsprechend der Mehrzahl von Übergängen (202) erzeugt.

2. Verfahren nach Anspruch 1, **dadurch gekennzeichnet, dass** der Definierungsschritt zumindest eine Informationskomponente (201a) definiert, die eine Referenz auf ein Rohinhaltsobjekt (304) enthält.

3. Verfahren nach Anspruch 2, **dadurch gekennzeichnet, dass** die Referenz einen Dateipfad zu einem Ort bezeichnet, an dem das Rohinhaltsobjekt (304) gespeichert ist.

4. Verfahren nach Anspruch 1, 2 oder 3, **dadurch gekennzeichnet, dass** der mindestens eine Produktionsparameter (301, 302) eine Spielzeitvariable (302) enthält, die während der Wiedergabe des audiovisuellen Produktes verfügbar ist.

5. Verfahren nach einem oder mehreren der vorstehenden Ansprüche, **dadurch gekennzeichnet, dass** der mindestens eine Produktionsparameter (301, 302) einen Nur-Produktionsparameter (301) enthält, der während der Wiedergabe des audiovisuellen Produktes nicht verfügbar ist.

6. Verfahren nach einem oder mehreren der vorstehenden Ansprüche, **dadurch gekennzeichnet, dass** die Wahlkomponente (201b) eine Referenz zu einer Präsentationsschablone (305) und eine Referenz zu mindestens einem austauschbaren Rohinhaltsobjekt (304) enthält, das in der Schablone entsprechend dem mindestens einen Produktionsparameter (301, 302) abgelegt wird.

7. Verfahren nach einem oder mehreren der vorstehenden Ansprüche, **dadurch gekennzeichnet, dass** der Definierungsschritt das Definieren mindestens einer Meta-Komponente (201c) enthält, die einen Satz von Komponenten (201) und Übergängen darstellt.

8. Verfahren nach Anspruch 7, **dadurch gekennzeichnet, dass** die mindestens eine Meta-Komponente (201 c) eine prozedural definierte Darstellung eines Satzes von Komponenten (201) und Übergängen (202) ist.

9. Verfahren nach einem oder mehreren der vorstehenden Ansprüche, **dadurch gekennzeichnet, dass** jeder Übergang (202) eine zulässige Bewegung von einer Komponenten (201) zu einer anderen Komponenten (201) darstellt.

10. Verfahren nach einem oder mehreren der vorstehenden Ansprüche, **dadurch gekennzeichnet, dass** jeder Übergang (202) einem Triggervorgang (203) zugeordnet ist.

11. Verfahren nach Anspruch 10, **dadurch gekennzeichnet, dass** der Triggervorgang (203) ein Vorgang ist, der während der Wiedergabe des audiovisuellen Produktes auftritt.

12. Verfahren nach Anspruch 11, **dadurch gekennzeichnet, dass** der Triggervorgang (203) einen Benutzerbefehl oder den Ablauf eines Zeitgebers empfängt.

13. Verfahren nach einem oder mehreren der vorstehenden Ansprüche, weiter **gekennzeichnet durch** den Schritt der Prüfung der erwarteten Übereinstimmung des audiovisuellen Produktes mit dem vorbestimmten Ausgabeformat unter Benutzung der Mehrzahl von Komponenten (201) und der Mehrzahl von Übergängen (202).

14. Verfahren nach Anspruch 13, **dadurch gekennzeichnet, dass** das vorbestimmte Ausgabeformat eine hierarchische Datenstruktur mit Einschränkung der Anzahl von Objekten ist, die in der Datenstruktur auf jeder Ebene der Hierarchie existieren können, und dass der Schritt der Prüfung eine Vorhersage einer erwarteten Anzahl von Objekten einer Ebene und einen Vergleich der erwarteten Anzahl mit den Einschränkungen der hierarchischen Datenstruktur einschließt.

15. Verfahren nach Anspruch 13 oder 14, **dadurch gekennzeichnet, dass** der Schritt der Prüfung die Vorhersage einer erwarteten Gesamtgröße des audiovisuellen Produktes und den Vergleich der erwarteten Gesamtgröße mit der Speicherkapazität eines vorbestimmten Speichermediums enthält.

16. Verfahren nach einem oder mehreren der vorstehenden Ansprüche, **dadurch gekennzeichnet, dass** der Expandierungsschritt folgende Schritte enthält:
Auswählen eines oder mehrerer Rohinhaltsobjekte (304) aus der Mehrzahl von Rohinhaltsobjekten (304) entsprechend dem mindestens einem Produktionsparameter (301, 302) und
Kombinieren der ausgewählten Rohinhaltsobjekte (304), um einen der AV-Inhalte (120) zu bilden.

17. Verfahren nach Anspruch 16, weiter **gekennzeichnet durch** Wiederholen der Auswahl- und Kombinationsschritte, um automatisch eine Mehrzahl von explizit realisierten AV-Inhalten (120) aus einer der Komponenten (201) zu bilden.

18. Verfahren nach einem oder mehreren der vorstehenden Ansprüche, **dadurch gekennzeichnet, dass** der Expansionsschritt das Erzeugen eines oder mehrerer explizit realisierter AV-Inhalte (120) aus der Mehrzahl von Komponenten (201) enthält, um den Satz von AV-Inhalten zu bilden.

19. Verfahren nach einem oder mehreren der vorstehenden Ansprüche, **dadurch gekennzeichnet, dass** jeder Übergang (202) zwischen ersten und zweiten Komponenten (201) zugeordnet ist und dass das Erzeugen des Satzes von Verbindungen (132, 134) das Auswerten jedes Überganges (202) bedeutet, um einen oder mehrere Verbindungen (132, 134) zu erzeugen, von denen jede Verbindung (132, 134) zwischen einem von der ersten Komponente erzeugten Knoten (110) und einem von der zweiten Komponente erzeugten Knoten (110) liegt.

20. Verfahren nach einem oder mehreren der vorstehenden Ansprüche, **dadurch gekennzeichnet, dass** der Expansionsschritt folgende Schritte enthält:
Auswertung mindestens eines der Übergänge (202), um eine mindestens einem ersten Knoten (110) zugeordnete Ausgangslogik (134) zu erzeugen,
Auswertung einer der Komponenten (201), um eine mindestens einem zweiten Knoten (110) zugeordnete Eingangslogik (132) zu erzeugen, und
Herstellung einer Verbindung zwischen dem ersten und dem zweiten Knoten (110) entsprechend der Eingangslogik (132) und der Ausgangslogik (134).

21. Verfahren nach Anspruch 20, **dadurch gekennzeichnet, dass** mindestens einer der Übergänge (202) einem Triggervorgang (203) zugeordnet ist und der Expansionsschritt die Auswertung des Triggervorganges (203) enthält, um die mindestens dem ersten Knoten (110) zugeordnete Ausgangslogik (134) zu bestimmen.

22. Verfahren nach einem oder mehreren der vorstehenden Ansprüche, weiter **gekennzeichnet durch** den Schritt der Prüfung der erwarteten Übereinstimmung des audiovisuellen Produktes mit dem vorbestimmten Ausgabeformat unter Benutzung der AV-Inhalte (120) und der expandierten Zwischendatenstruktur der Knoten (110) und Verbindungen (132, 134).

23. Verfahren nach Anspruch 22, **dadurch gekennzeichnet, dass** das vorbestimmte Ausgabeformat eine hierarchische Datenstruktur ist mit Einschränkung der Anzahl von Objekten, die in der Datenstruktur auf jeder Ebene der Hierarchie existieren können, und dass der Schritt der Prüfung eine Vorhersage einer erwarteten Anzahl von Objekten einer Ebene und einen Vergleich der erwarteten Anzahl mit den Einschränkungen der hierarchischen Datenstruktur einschließt.

24. Verfahren nach Anspruch 23, **dadurch gekennzeichnet, dass** der Schritt der Prüfung die Vorhersage einer erwarteten Gesamtgröße des audiovisuellen Produktes und den Vergleich der erwarteten Gesamtgröße mit der Speicherkapazität eines vorbestimmten Speichermediums enthält.

25. Verfahren nach einem oder mehreren der vorstehenden Ansprüche, **dadurch gekennzeichnet, dass** die AV-Inhalte (120) ein Datenformat haben, das entsprechend dem vorbestimmten Ausgabeformat spezifiziert ist.

26. Verfahren nach einem oder mehreren der vorstehenden Ansprüche, **dadurch gekennzeichnet, dass** die AV-Inhalte (120) ein Datenformat haben, das entsprechend dem vorbestimmten Ausgabeformat spezifiziert ist, während die Rohinhaltsobjekte (304) nicht auf ein Datenformat entsprechend dem vorbestimmten Ausgabeformat beschränkt sind.

27. Verfahren nach einem oder mehreren der vorstehenden Ansprüche, weiter **gekennzeichnet durch** den Schritt des Aufzeichnens des audiovisuellen Produkts auf einem Aufzeichnungsmedium.

28. Verfahren nach Anspruch 27, **dadurch gekennzeichnet, dass** das Aufzeichnungsmedium eine optische Scheibe ist.

29. Verfahren nach einem oder mehreren der vorstehenden Ansprüche, **dadurch gekennzeichnet, dass** das vorbestimmte Ausgabeformat einer DVD-Video-Spezifikation entspricht.

30. Verfahren nach einem oder mehreren der vorstehenden Ansprüche, **dadurch gekennzeichnet, dass** die AV-Inhalte (120) je mindestens ein Video-Objekt, Null bis 8 Audio-Objekte und Null bis 32 Sub-Bild-Objekte entsprechend der DVD-Video-Spezifikation enthalten.

31. Verfahren nach einem oder mehreren der vorstehenden Ansprüche, **dadurch gekennzeichnet, dass** das vorbestimmte Ausgabeformat einer DVD-Video-Spezifikation entspricht und dass der Erzeugungsschritt folgende Schritte enthält:
Erzeugen von DVD-Video-Strukturlokationen von den Knoten (110) der expandierten Zwischendatenstrukturen,
Platzieren der explizit realisierten AV-Inhalte (120) an den erzeugten Strukturlokationen und
Austauschen der Verbindungen (132, 134) der expandierten Zwischendatenstrukturen durch explizite Referenzen der DVD-Video-Strukturlokationen.

32. Verfahren nach einem oder mehreren der vorstehenden Ansprüche, **dadurch gekennzeichnet, dass** das Verfahren durch einen Computer durchgeführt wird.

33. Verfahren zum Erzeugen eines optischen Scheibenproduktes, **gekennzeichnet durch** Aufzeichnen eines audiovisuellen Produktes entsprechend einem Verfahren nach einem oder mehreren der Ansprüche 1 bis 31 auf einer optischen Scheibe.

34. Computeranordnung, die zur Durchführung des Verfahrens nach einem oder mehreren der Ansprüche 1 bis 32 programmiert ist.

35. Aufzeichnungsmedium mit darauf aufgezeichneten, mit einem Computer verarbeitbaren Instruktionen zur Durchführung des Verfahrens nach einem oder mehreren der Ansprüche 1 bis 32.

36. Aufzeichnungsmedium mit einem darauf aufgezeichneten audiovisuellen Produkt, das entsprechend einem Verfahrens nach einem oder mehreren der Ansprüche 1 bis 32 produziert ist.

## Revendications

1. Procédé de création destiné à la création d'un produit audiovisuel, comprenant les étapes suivantes :
fournir un ensemble de données AV réalisées explicitement (120) dans lequel les données AV (120) comprennent toutes un objet vidéo, zéro objet audio ou plus, et zéro objet de sous-image ou plus, suivant un format de sortie prédéterminé et une structure de données intermédiaire développée constituée de noeuds (110) et de liens (132, 134), où chaque noeud (110) est associé à une donnée AV réalisée explicitement (120) de l'ensemble et les liens (132, 134) représentent le mouvement de navigation d'un noeud (110) à un autre pendant la lecture des données AV (120) ; et
créer un produit audiovisuel dans un format de sortie prédéterminé, en créant des objets dans une structure de données hiérarchique définie par le format de sortie prédéterminé avec des objets aux différents niveaux de la structure de données, selon la structure de données intermédiaire de noeuds (110) et de liens (132, 134), et où les objets présents dans la structure de données hiérarchique comprennent les données AV réalisées explicitement (120) ;
**caractérisé en ce que** le procédé comprend les étapes suivantes :
la définition d'une pluralité de composants (201), incluant la définition d'au moins un composant de choix (201b) comprenant une référence à une pluralité d'objets à contenu brut (304) et au moins un paramètre de création (301, 302) ; et la définition d'une pluralité de transitions (202) qui représentent des mouvements de navigation entre la pluralité de composants (201) ;
le développement de la pluralité de composants (201) et de la pluralité de transitions (202), incluant pour ledit au moins un composant de choix (201b), la construction d'une ou de plusieurs données AV de l'ensemble de données AV réalisées explicitement (120) à partir dudit ou desdits un ou plusieurs objet(s) à contenu brut (304) selon ledit au moins un paramètre de création (301, 302), la création de la structure de données intermédiaire développée dans laquelle chaque noeud (110) représente une donnée AV (120) de l'ensemble et la création de l'ensemble de liens (132, 134) entre les noeuds (110) selon la pluralité de transitions (202).

2. Procédé selon la revendication 1, dans lequel l'étape de définition comprend la définition d'au moins un composant d'information (201a) qui comprend une référence à un objet à contenu brut (304).

3. Procédé selon la revendication 2, dans lequel la référence désigne un chemin de fichier conduisant à un endroit où l'objet à contenu brut (304) est stocké.

4. Procédé selon la revendication 1, 2 ou 3, dans lequel ledit au moins un paramètre de création (301, 302) comprend une variable de durée d'exécution (302) disponible pendant la lecture du produit audiovisuel.

5. Procédé selon l'une quelconque des revendications précédentes, dans lequel ledit au moins un paramètre de création (301, 302) comprend un paramètre réservé à la création (301) qui n'est pas disponible pendant la lecture du produit audiovisuel.

6. Procédé selon l'une quelconque des revendications précédentes, dans lequel le composant de choix (201b) comprend une référence à un gabarit de présentation (305) et une référence à au moins un objet à contenu brut substituable (304) à placer dans le gabarit selon ledit au moins un paramètre de création (301, 302).

7. Procédé selon l'une quelconque des revendications précédentes, dans lequel l'étape de définition comprend la définition d'au moins un méta-composant (201c) représentant un ensemble de composants (201) et de transitions.

8. Procédé selon la revendication 7, dans lequel ledit au moins un méta-composant (201c) est une représentation de l'ensemble de composants (201) et de transitions (202) définie de manière procédurale.

9. Procédé selon l'une quelconque des revendications précédentes, dans lequel chaque transition (202) représente un mouvement autorisé d'un composant (201) à un autre composant (201).

10. Procédé selon l'une quelconque des revendications précédentes, dans lequel chaque transition (202) est associée à un évènement de déclenchement (203).

11. Procédé selon la revendication 10, dans lequel l'évènement de déclenchement (203) est un évènement se produisant pendant la lecture du produit audiovisuel.

12. Procédé selon la revendication 11, dans lequel l'évènement de déclenchement (203) est le fait de recevoir une commande d'utilisateur, ou l'expiration d'un temporisateur.

13. Procédé selon l'une quelconque des revendications précédentes, comprenant en outre l'étape de vérification de la conformité attendue du produit audiovisuel avec le format de sortie prédéterminé, en utilisant la pluralité de composants (201) et la pluralité de transitions (202).

14. Procédé selon la revendication 13, dans lequel le format de sortie prédéterminé est une structure de données hiérarchique comportant des limites sur le nombre d'objets qui peuvent exister dans la structure de données à chaque niveau de la hiérarchie, et l'étape de vérification comprend la prédiction d'un nombre attendu d'objets à un certain niveau et la comparaison de ce nombre attendu avec les limites de la structure de données hiérarchique.

15. Procédé selon la revendication 13 ou 14, dans lequel l'étape de vérification comprend la prédiction d'une taille totale attendue du produit audiovisuel, et la comparaison de cette taille totale attendue avec une capacité de stockage d'un support de stockage prédéterminé.

16. Procédé selon l'une quelconque des revendications précédentes, dans lequel l'étape de développement comprend :
la sélection d'un ou de plusieurs objet(s) à contenu brut (304) parmi la pluralité d'objets à contenu brut (304) selon ledit au moins un paramètre de création (301, 302) ; et
l'association des objets à contenu brut sélectionnés (304) pour former l'une des données AV (120).

17. Procédé selon la revendication 16, comprenant la répétition des étapes de sélection et d'association pour construire automatiquement une pluralité des données AV réalisées explicitement (120) à partir dudit composant (201).

18. Procédé selon l'une quelconque des revendications précédentes, dans lequel l'étape de développement comprend :
la création à partir de chacun des composants de la pluralité de composants (201) d'une ou de plusieurs données AV réalisées explicitement (120) pour fournir l'ensemble de données AV (120).

19. Procédé selon l'une quelconque des revendications précédentes, dans lequel chaque transition (202) est associée entre des premier et deuxième composants (201), et la création de l'ensemble de liens (132, 134) comprend l'évaluation de chaque transition (202) pour créer un ou plusieurs lien(s) (132, 134), chacun des liens (132, 134) se trouvant entre un noeud (110) créé à partir du premier composant (201) et un noeud (110) créé à partir du deuxième composant (201).

20. Procédé selon l'une quelconque des revendications précédentes, dans lequel l'étape de développement comprend l'évaluation d'au moins l'une des transitions (202) pour créer une logique de sortie (134) associée à au moins un premier noeud (110), l'évaluation de l'un des composants (201) pour créer une logique d'entrée (132) associée à au moins un deuxième noeud (110), et la création d'un lien entre les premier et deuxième noeuds (110) selon la logique d'entrée (132) et la logique de sortie (134).

21. Procédé selon la revendication 20, dans lequel au moins l'une des transitions (202) est associée à un évènement de déclenchement (203), et l'étape de développement comprend l'évaluation de l'évènement de déclenchement (203) pour déterminer la logique de sortie (134) associée au moins au premier noeud (110).

22. Procédé selon l'une quelconque des revendications précédentes, comprenant en outre l'étape de vérification de la conformité attendue du produit audiovisuel avec le format de sortie prédéterminé, en utilisant les données AV (120) et la structure de données intermédiaire développée constituée de noeuds (110) et de liens (132, 134).

23. Procédé selon la revendication 22, dans lequel le format de sortie prédéterminé est une structure de données hiérarchique comportant des limites sur le nombre d'objets qui peuvent exister dans la structure de données à chaque niveau de la hiérarchie, et l'étape de vérification comprend la prédiction d'un nombre attendu d'objets à un certain niveau et la comparaison de ce nombre attendu avec les limites de la structure de données hiérarchique.

24. Procédé selon la revendication 23, dans lequel l'étape de vérification comprend la prédiction d'une taille totale attendue du produit audiovisuel, et la comparaison de cette taille totale attendue avec une capacité de stockage d'un support de stockage prédéterminé.

25. Procédé selon l'une quelconque des revendications précédentes, dans lequel les données AV (120) ont un format de données spécifié d'après le format de sortie prédéterminé.

26. Procédé selon l'une quelconque des revendications précédentes, dans lequel les données AV (120) ont toutes un format de données qui se conforme au format de sortie prédéterminé, alors que les objets à contenu brut (304) ne sont pas limités à un format de données du format de sortie prédéterminé.

27. Procédé selon l'une quelconque des revendications précédentes, comprenant en outre l'étape d'enregistrement du produit audiovisuel sur un support d'enregistrement.

28. Procédé selon la revendication 27, dans lequel le support d'enregistrement est un disque optique.

29. Procédé selon l'une quelconque des revendications précédentes, dans lequel le format de sortie prédéterminé est une spécification de DVD vidéo.

30. Procédé selon l'une quelconque des revendications précédentes, dans lequel les données AV (120) comprennent toutes au moins un objet vidéo, de zéro à huit objets audio, et de zéro à trente-deux objets de sous-image, suivant la spécification de DVD vidéo.

31. Procédé selon l'une quelconque des revendications précédentes, dans lequel le format de sortie prédéterminé est une spécification de DVD vidéo et dans lequel l'étape de création comprend la création d'emplacements de structure de DVD vidéo à partir des noeuds (110) de la structure de données intermédiaire développée, le placement des données AV réalisées explicitement (120) dans les emplacements de structure créés, et le remplacement des liens (132, 134) de la structure de données intermédiaire développée par des références explicites aux emplacements de structure de DVD vidéo.

32. Procédé selon l'une quelconque des revendications précédentes, dans lequel le procédé est mis en oeuvre par un ordinateur.

33. Procédé de création d'un produit de type disque optique, comprenant les étapes suivantes :
enregistrer sur un disque optique un produit audiovisuel créé selon le procédé de l'une quelconque des revendications 1 à 31.

34. Plate-forme informatique programmée pour exécuter le procédé de l'une quelconque des revendications 1 à 32.

35. Support d'enregistrement sur lequel sont enregistrées des instructions pouvant être mises en oeuvre dans un ordinateur pour exécuter le procédé de l'une quelconque des revendications 1 à 32.

36. Support d'enregistrement sur lequel est enregistré un produit audiovisuel créé selon le procédé de l'une quelconque des revendications 1 à 32.
